# EUROPÄISCHE PATENTSCHRIFT

(11) **EP 0 367 962 B1**
(45) Veröffentlichungstag und Bekanntmachung des Hinweises auf die Patenterteilung: **04.08.1993**
(21) Anmeldenummer: 89117575.4
(22) Anmeldetag: 22.09.1989
(51) Int. Cl.: B60K 23/04

(54) **Verfahren und Vorrichtung zur Steuerung von Sperrdifferentialen**
Process and apparatus for controlling a locking differential
Procédé et dispositif de contrôle du verouillage d'un différentiel

(30) Priorität: 08.11.1988 DE 3837862
(43) Veröffentlichungstag der Anmeldung: 16.05.1990
(73) Patentinhaber: GKN AUTOMOTIVE AKTIENGESELLSCHAFT, D-53721 Siegburg (DE)
(72) Erfinder: Stall, Eugen, Dr., D-5130 Stolberg (DE); Rickell, Robert, D-5200 Siegburg (DE)
(74) Vertreter: Neumann, Ernst Dieter, Dipl.-Ing.

(56) Entgegenhaltungen:
- EP-A- 0 311 139
- DE-A- 3 708 063
- DE-A- 3 841 815
- US-A- 3 945 475

## Beschreibung

Die Erfindung betrifft ein Verfahren und eine Vorrichtung zur stufenlosen Steuerung des Sperrgrades von extern gesteuerten Sperrdifferentialen in einer angetriebenen Achse von mehrachsigen Fahrzeugen, bei dem Radgeschwindigkeiten von Rädern der angetriebenen Achse und von Rädern einer nicht angetriebenen Achse erfaßt und als Regelgrößen verwendet werden. Extern gesteuerte Sperrdifferentiale stehen hierbei im Gegensatz zu einfachen drehmomentoder drehzahldifferenzfühlenden Sperrdifferentialen.

Sperrdifferentiale mit einer externen Steuerung weisen üblicherweise Lamellenkupplungen auf, mit denen das offene Differential gesperrt werden kann. Durch geeignete Stellglieder kann das mit der Lamellenkupplung übertragene Sperrmoment auf beispielsweise hydraulischem Wege stufenlos verändert werden. Dies ist wichtig, um mit Hilfe einer vornehmlich elektronischen Regelung das Sperrmoment im Hinblick auf Traktion und Fahrstabilität möglichst gut an die unterschiedlichen Schlupf- bzw. Reibverhältnisse zwischen Reifen und Fahrbahn anzupassen. Mit Hilfe von Drehzahlsensoren an der angetriebenen und an der nicht angetriebenen Achse können die Schlupfverhältnisse der antreibenden Räder erkannt werden und durch Ansteuerung des Sperrdifferentials das Durchdrehen eines Rades verhindert werden.

Es sind Regelverfahren bekannt, die in Abhängigkeit von der jeweils mit den Raddrehzahlsensoren ermittelten Fahrsituation eine bestimmte Sperrwirkung einstellen. Für die verschiedensten Fahrsituationen gibt es dabei eine Fülle unterschiedlicher Reaktionen der Sperrkupplung. Mit Berücksichtigung der verschiedensten Verhältnisse der Störgrößen zueinander führt dies zu komplexen und deshalb unübersichtlichen und aufwendigen Regelstrategien.

Bei bekannten Differentialen der genannten Art wird bei hohem Schlupf an der angetriebenen Achse die Sperrkupplung vollständig geschlossen, so daß bei 100 % Sperrwirkung beide Räder der angetriebenen Achse mit genau der gleichen Drehzahl drehen. In diesem Fall läßt sich durch Auswertung der Drehzahl nicht mehr erkennen, ob die Notwendigkeit für die Betätigung der Sperrkupplung noch gegeben ist. Änderungen der Griffigkeit, der Radlasten, des Lenkwinkels oder des Antriebsmomentes (Störgrößen) können in diesem Fall nicht mehr zur Anpassung des richtigen Sperrmomentes berücksichtigt werden. Die Möglichkeit, kurzzeitig die Sperrwirkung aufzuheben, um aus dem Verhalten der Raddrehzahlen die aktualisierte bzw. korrigierte Sperrwirkung für das nächste Zeitintervall zu berechnen, wäre aufgrund eines in Intervallen auf- und abschwellenden Sperrmomentes für die Fahrstabilität ungünstig. Insbesondere für frontgetriebene Fahrzeuge ist die Betätigung eines gesteuerten Sperrdifferentials nach der obengenannten Art wegen negativer Lenkeinflüsse ungünstig.

Aus der DE-A-3 708 063 ist eine Ausgleichsgetriebeeinheit mit einer Steuereinheit zur Schlupfbegrenzung und einer Steuereinrichtung zur Vermeidung des Durchdrehens von Rädern eines Kraftfahrzeuges bekannt. Der Schlupf an jedem der beiden angetriebenen Räder wird hierbei unabhängig voneinander mit einem festen vorgegebenen Schlupfkriterium verglichen, das einen festgesetzten Schlupf repräsentiert. Danach wird die Steuereinheit zur Schlupfsteuerung betätigt. Eine Berücksichtigung der Fahrgeschwindigkeit findet bei der Schlupfsteuerung dieser Art nicht statt. Eine vollständige Sperrung des Ausgleichsgetriebes, d. h. ein Einregeln gleichen Schlupfes an beiden angetriebenen Rädern, ist nicht ausgeschlossen. Die vorgesehene Kombination der Schlupfbegrenzungsvorrichtung mit einer Traktionssteuerung macht die Vorrichtung aufwendig und kompliziert und bedingt komplizierte ineinandergreifende Steuerungsvorgänge.

Der Erfindung liegt die Aufgabe zugrunde, ein Verfahren zur stufenlosen Steuerung des Sperrgrades von extern gesteuerten Sperrdifferentialen bereitzustellen, das bei Zustandsänderungen der Schlupfwerte an der angetriebenen Achse, hervorgerufen durch Änderung der Störgrößen, nämlich der Griffigkeit der Straßenoberfläche, der Radlasten und anderer Radkräfte, schnell reagiert. Die Lösung hierfür besteht darin, daß ein Differenzgeschwindigkeitssollwert △_{v soll} für die angetriebenen Räder in Abhängigkeit von der an den nicht angetriebenen Rädern ermittelte Fahrzeuggeschwindigkeit v_{F} bestimmt wird, und daß die Radgeschwindigkeitsdifferenz Δ_{v ist} zwischen den angetriebenen Rädern erfaßt und durch Variieren der Sperrwirkung auf den stets von Null abweichenden Differenzgeschwindigkeitssollwert Δ_{v soll} zum Ausgleich des Einflusses von Störgrößen nachgeregelt wird. Bevorzugt erfolgt dies, solange die Radgeschwindigkeitsdifferenz größer als der Differenzgeschwindigkeitssollwert ist. Da hierbei das Sperrdifferential nie vollkommen gesperrt wird, können mit den beiden Drehzahlsensoren an den Rädern der angetriebenen Achse jederzeit unterschiedliche Kraftschlußbedingungen erkannt werden. Grundprinzip dieser erfindungsgemäßen Regelstrategie ist es somit, daß die Sperrkupplung des Differentialgetriebes nie zu 100 % sperren soll, sondern immer eine Begrenzung der Radgeschwindigkeitsdifferenz eingeregelt wird. Solange diese unterhalb des Differenzgeschwindigkeitssollwertes liegt, greift der Regelkreis nicht ein. Mit einer derartigen Closed-loop-Regelung des Sperrmomentes kann die Wirkung von weiteren Störgrößen neben der Veränderung der Reibwerte, beispielsweise die Änderung der Radlast, des Lenkwinkels und des Antriebsmomentes mittelbar über die Drehzahlerfassung berücksichtigt werden. Hierbei kann nach einer bevorzugten Weiterbildung insbesondere der Differenzgeschwindigkeitssollwert in Abhängigkeit vom insbesondere über die Drehzahlerfassung an den gelenkten Rädern ermittelten Lenkwinkel δ _{L} beeinflußt werden.

In bevorzugter günstiger Auslegung wird das Verfahren so durchgeführt, daß bei geringen Fahrgeschwindigkeiten der zugeordnete Differenzgeschwindigkeitssollwert klein und konstant ist und bei höheren Fahrgeschwindigkeiten insbesondere linear ansteigt.

Der bei niedriger Fahrgeschwindigkeit und beim Anfahren angenommene Differenzgeschwindigkeitssollwert wird möglichst niedrig gewählt, damit schon bei geringfügigem Durchdrehen eines Antriebsrades die Sperrwirkung einsetzt. Mit steigender Fahrgeschwindigkeit und steigendem Betrag des Lenkwinkels wird der Differenzgeschwindigkeitssollwert größer. Beim Bremsen bzw. beim Betätigen des Bremspedals wird nach einer weiteren günstigen Auslegung das Sperrmoment möglichst schnell abgeschaltet, so daß eine die Bremsung beeinflussende Sperrwirkung der angetriebenen Achse aufgehoben wird. Dies ist für die Funktion von automatischen Blockierverhinderern von besonderer Bedeutung.

Eine zur Durchführung des Verfahrens geeignete Vorrichtung nach Art eines Closed-loop-Regelkreises ist störsignalunempfindlich und kann auch betätigter Sperrkupplung des Sperrdifferential durch Auswertung der Einzelraddrehzahlen das Kupplungsmoment entsprechend den Kraftschlußverhältnissen kontinuierlich nachregeln. Im Hinblick auf Traktion und Stabilität sind deshalb bei dem hier genannten Verfahren und der entsprechenden Vorrichtung Vorteile zu erwarten.

Prinzipdarstellungen der erfindungsgemäßen Regelungsvorrichtung sind in den Zeichnungen dargestellt.
- Fig. 1: zeigt ein Prinzipbild mit Darstellung der Einflußgrößen,
- Fig. 2: zeigt ein Prinzipbild des erfindungsgemäßen Regelkreises in einer ersten Ausführung.
- Fig. 3: zeigt ein Prinzipbild des erfindungsgemäßen Regelkreises in einer zweiten Ausführung

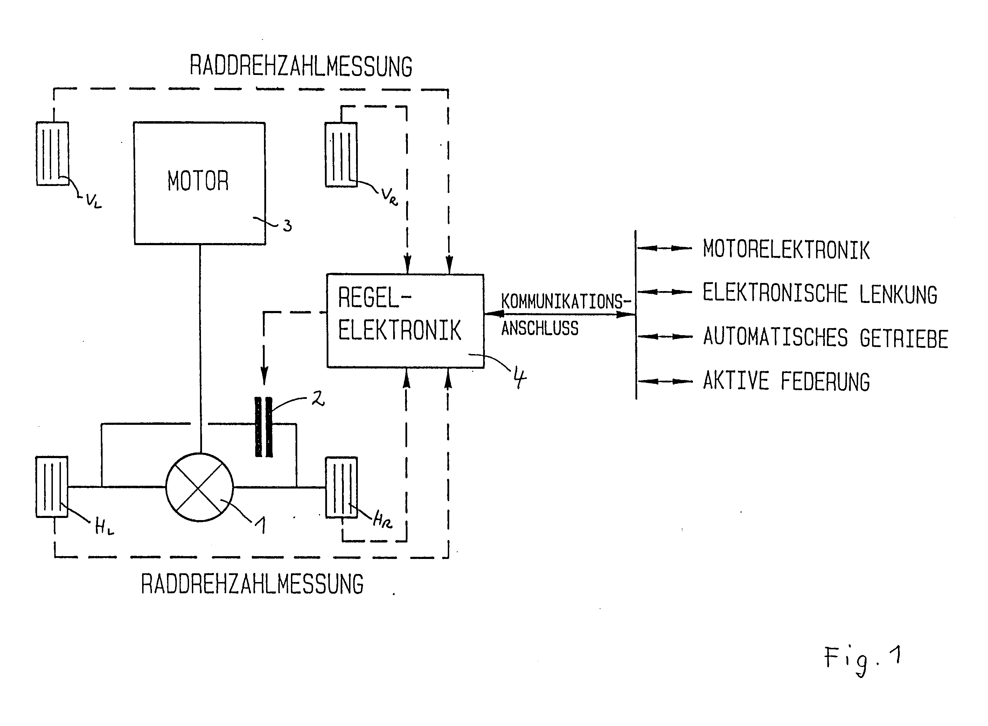

In Fig. 1 sind als Teile eines schematisierten Fahrzeugantriebs die nicht angetriebenen Vorderräder V_{L}, V_{R}, die über ein Differentialgetriebe 1 mit einer Sperrkupplung 2 verbundene Hinterräder H_{L}, H_{R}, eine Brennkraftmaschine 3 und eine elektronische Steuerung 4 dargestellt. Neben der Drehzahlerfassung aller vier Räder ist durch Pfeile die ggfs. wechselweise Beeinflussung der elektronischen Steuerung mit dem Motorsteuerungssystem, dem Lenksystem, dem automatischen Getriebe und einer aktiven Radaufhängung dargestellt, während die Sperrkupplung direkt mit der elektronischen Steuerung 4 verbunden ist.

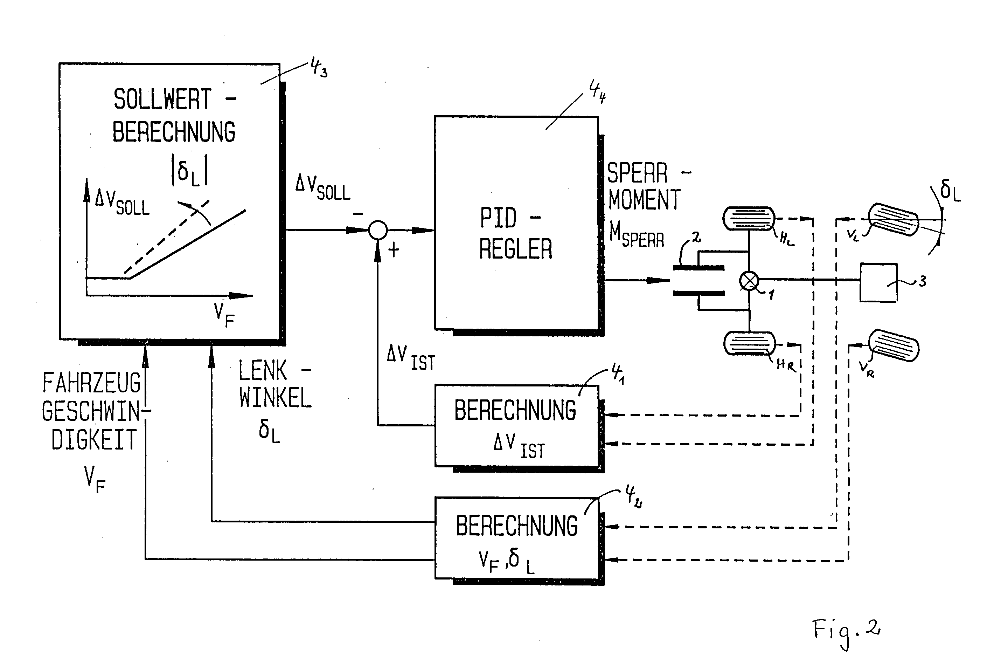

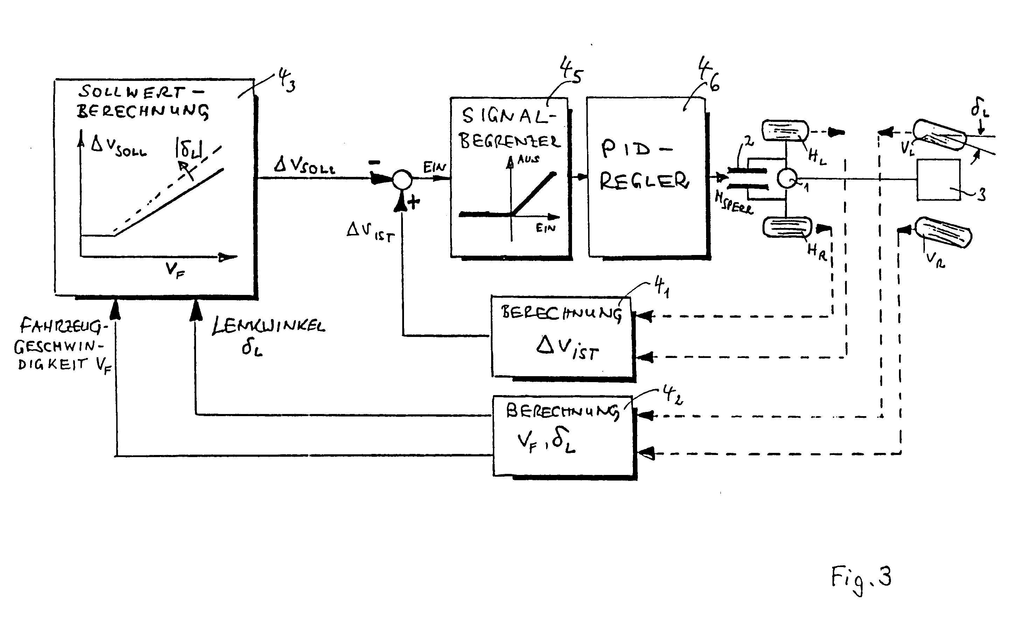

In den Figuren 2 und 3 sind wiederum die nicht angetriebenen Vorderräder V_{L}, V_{R}, die angetriebenen Hinterräder H_{L}, H_{R}, das Differentialgetriebe 1, die Sperrkupplung 2 und die Brennkraftmaschine 3 erkennbar. Die elektronische Steuerung 4 besteht im einzelnen auf mehreren Einheiten, nämlich einer Einheit 4₁ zur Berechnung des Geschwindigkeitsdifferenzistwertes aus der Radgeschwindigkeit an den angetriebenen Rädern, einer Einheit 4₂ zur Berechnung der Fahrgeschwindigkeit v_{F} und des Lenkwinkels δ _{L}, einer Einheit 4₃ zur Sollwertberechnung der Differenzgeschwindigkeit in Abhängigkeit von der Fahrzeuggeschwindigkeit v_{F} und vom Lenkwinkel δ _{L}, einem Additionsglied für die Werte des Radgeschwindigkeitssollwertes Δ_{v ist} und des Differenzgeschwindigkeitssollwertes Δ_{v soll}, und einem PID-Regler 4₄ zur Ansteuerung der Sperrwirkung der Sperrkupplung (nach Fig. 2) bzw. einem Signalbegrenzer 4₅ der bei negativen Werten dieser Addition sperrt sowie einem PID-Regler 4₆ (nach Fig. 3.)

## Patentansprüche

1. Verfahren zur stufenlosen Steuerung des Sperrgrades von extern gesteuerten Sperrdifferentialen in einer angetriebenen Achse von mehrachsigen Fahrzeugen, bei dem Radgeschwindigkeiten von Rädern (H_{L}, H_{R}) der angetriebenen Achse und von Rädern (V_{R}, V_{L}) einer nicht-angetriebenen Achse erfaßt und als Regelgrößen verwendet werden,
dadurch gekennzeichnet,
daß ein Differenzgeschwindigkeitssollwert (Δ_{v soll}) für die angetriebenen Räder (H_{L}, H_{R}) in Abhängigkeit von der an den nicht-angetriebenen Rädern (V_{L}, V_{R}) ermittelten Fahrzeuggeschwindigkeit (v_{F}) bestimmt wird und daß die Radgeschwindigkeitsdifferenz (Δ_{v ist}) zwischen den angetriebenen Räder (H_{L}, H_{R}) erfaßt und durch Variieren der Sperrwirkung auf den stets von Null abweichenden Differenzgeschwindigkeitssollwert (Δ_{v soll}) zum Ausgleich des Einflusses von Störgrößen nachgeregelt wird.

2. Verfahren nach Anspruch 1,
dadurch gekennzeichnet,
daß die Radgeschwindigkeitsdifferenz (Δ_{v ist}) nachgeregelt wird solange die Radgeschwindigkeitsdifferenz (Δ_{v ist}) größer als der Differenzgeschwindigkeitssollwert (Δ_{v soll}) ist.

3. Verfahren nach Anspruch 1 oder 2,
dadurch gekennzeichnet,
daß der Differenzgeschwindigkeitssollwert (Δ_{v soll}) in Abhängigkeit von dem an den nicht angetriebenen Rädern, insbesondere über die Radgeschwindigkeitsdifferenz, erfaßten Lenkwinkel (δ_{L}) beeinflußt wird.

4. Verfahren nach einem der Ansprüche 1 bis 3,
dadurch gekennzeichnet,
daß der Differenzgeschwindigkeitssollwert (Δ_{v soll}) in Abhängigkeit von weiteren fahrdynamisch relevanten Größen, insbesondere den Bewegungen der Radaufhängungen und/oder des Fahrzeugaufbaus beeinflußt wird.

5. Verfahren nach einem der Ansprüche 1 bis 4,
dadurch gekennzeichnet,
daß der Differenzgeschwindigkeitssollwert (Δ_{v soll}) bei geringen Fahrzeuggeschwindigkeiten (v_{F}) klein und konstant ist und bei höheren Fahrzeuggeschwindigkeiten insbesondere linear ansteigt.

6. Verfahren nach einem der Ansprüche 1 bis 5,
dadurch gekennzeichnet,
daß beim Bremsen des Fahrzeugs, insbesondere beim Betätigen des Bremspedals, die Sperrwirkung zwischen den angetriebenen Rädern (H_{V}, H_{R}) unverzüglich aufgehoben wird.

7. Vorrichtung zur stufenlosen Steuerung des Sperrgrades von extern gesteuerten Differentialgetrieben (1) in einer angetriebenen Achse von mehrachsigen Fahrzeugen nach Anspruch 1, bei dem die Drehzahlsensoren an der nicht angetriebenen Achse (V_{L}, V_{R}) mit einer Rechnerfunktionseinheit (4₂) verbunden sind, die die Fahrzeuggeschwindigkeit (v_{F}) berechnet,
dadurch gekennzeichnet,
daß diese Rechnerfunktionseinheit (4₂) Weiterhin eine dem Lenkwinkel ( δ ) entsprechende Größe berechnet, daß diese Rechnerfunktionseinheit (4₂) mit einer Weiteren Rechnerfunktionseinheit (4₃) verbunden ist, die einen Differenzgeschwindigkeitsollwert (Δ_{v soll}) für die Räder der angetriebenen Achse (H_{L}, H_{R}) in Abhängigkeit von der Fahrzeuggeschwindigkeit und einer dem Lenkwinkel ( δ ) entsprechende Größe berechnet oder nach GeschWindigkeitsbereichen aus einem Wertevorrat auswählt, daß die Drehzahlsensoren an den Rädern der angetriebenen Achse (H_{L}, H_{R}) mit einer Rechnerfunktionseinheit (4₁) verbunden sind, die die Radgeschwindigkeitsdifferenz (Δ_{v ist}) errechnet, und daß eine Rechnerfunktionseinheit Differenzgeschwindigkeitssollwert (Δ_{v soll}) und Radgeschwindigkeitsdifferenz (Δ_{v ist}) vergleicht und über eine Rechnerfunktionseinheit mit Reglerfunktion (4₄) ein Stellglied für die Sperrkupplung (2) des Differentialgetriebes ansteuert.

## Claims

1. A method of continuously controlling the degree of locking of externally controlled locking differentials in a driven axle of a multi-axle vehicle, in the case of which wheel speeds of wheels (H_{L}, H_{R}) of the driven axle and of wheels (V_{R}, V_{L}) of a non-driven axle are detected and used as control parameters,
characterised in
that a nominal differential speed value (Δ_{v soll}) is determined for the driven wheels (H_{L}, H_{R}) as a function of vehicle speed (v_{F}) determined at the non-driven wheels (V_{L}, V_{R}) and that the wheel speed differential (Δ_{v ist}) between the driven wheels (H_{L}, H_{R}) is detected and, for the purpose of offsetting the influence of interfering parameters, recontrolled by varying the locking effect on the nominal differential speed value (Δ_{v soll}) which always deviates from zero.

2. A method according to claim 1,
characterised in
that the wheel speed differential (Δ_{v ist}) is recontrolled as long as the wheel speed differential (Δ_{v ist}) is greater than the nominal differential speed value (Δ_{v soll}).

3. A method according to claim 1 or 2,
characterised in
that the nominal differential speed value (Δ_{v soll}) is influenced as a function of the steering angle (δ_{L}) detected at the non-driven wheels, especially via the wheel speed differential.

4. A method according to any one of claims 1 to 3,
characterised in
that the nominal differential speed value (Δ_{v soll}) is influenced as a function of further parameters relevant from the point of view of driving dynamics, especially the movements of the wheel suspension systems and/or the vehicle body.

5. A method according to any one of claims 1 to 4,
characterised in
that the nominal differential speed value (Δ_{v soll}) is low and constant at low vehicle speeds (v_{F}) and increases, especially linearly, at higher vehicle speeds.

6. A method according to any one of claims 1 to 5,
characterised in
that when braking the vehicle, especially when operating the brake pedal, the locking effect between the driven wheels (H_{V}, H_{R}) is cancelled immediately.

7. A device for continuously controlling the degree of locking of externally controlled differential gears (1) in a driven axle of a multi-axle vehicle according to claim 1, in the case of which speed sensors at the non-driven axle (V_{L}, V_{R}) are connected to a functional computer unit (4₂) which calculates the vehicle speed (v_{F}),
characterised in
that said functional computer unit (4₂) furthermore calculates a parameter corresponding to the steering angle (δ),that said functional computer unit (4₂) is connected to a further functional computer unit (4₃) which calculates a nominal differential speed value (Δ_{v soll}) for the wheels of the driven axle (H_{L}, H_{R}) as a function of the vehicle speed and a parameter corresponding to the steering angle (δ), or selects it from a value store according to speed ranges, that the speed sensors at the wheels of the driven axle (H_{L}, H_{R}) are connected to a functional computer unit (4₁) which calculates the wheel speed differential (Δ_{v ist}) and that a functional computer unit compares the nominal differential speed value (Δ_{v soll}) and the wheel speed differential (Δ_{v ist}) and, via a functional computer unit with a control (4₄) controls a setting member for the locking coupling (2) of the differential gear.

## Revendications

1. Procédé de commande sans gradations du degré de blocage de différentiels commandés de l'extérieur dans un essieu moteur de véhicules à plusieurs essieux, selon lequel on détecte des vitesses de roues (H_{L}, H_{R}) de l'essieu moteur et de roue (V_{R}, V_{L}) d'un essieu non moteur et on utilise ces vitesses de roue en tant que grandeurs de réglage, caractérisé
en ce qu'on détermine une valeur de consigne de vitesse différentielle (Δ_{vco}) pour les roues motrices (H_{L}, H_{R}) en fonction de la vitesse de véhicule (V_{F}) relevée sur les roues non motrices (V_{L}, V_{R}) et que l'on détecte la différence des vitesces de roue (Δᵥᵣₑ) entre les roues motrices (H_{L}, H_{R}) et on l'asservit à la valeur de consigne de vitesse différentielle (Δ_{vco}), laquelle diffère toujours de zéro, en vue de la compensation de l'influence de grandeurs perturbatrices.

2. Procédé selon la revendication 1, caractérisé en ce que l'on asservit la différence des vitesses de roue (Δᵥᵣₑ) tant que cette différence (Δᵥᵣₑ) est plus grande que la valeur de consigne de vitesse différentielle (Δ_{vco}).

3. Procédé selon la revendication 1 ou 2, caractérisé en ce que l'on influence la valeur de consigne de vitesse différentielle (Δ_{vco}) en fonction de l'angle de braquage (δ_{L}) détecté sur les roues non motrices, en particulier par le biais de la différence des vitesses de roue.

4. Procédé selon une des revendications 1 à 3, caractérisé en ce que l'on influence la valeur de consigne de vitesse différentielle (Δ_{vco}) en fonction d'autres grandeurs se rapportant à la dynamique de marche, en particulier en fonction des mouvements des suspensions de roues et/ou de la carrosserie du véhicule.

5. Procédé selon une des revendications 1 à 4, caractérisé en ce que la valeur de consigne de vitesse différentielle (Δ_{vco}) est petite et constante lorsque les vitesses de véhicule (v_{F}) sont faibles et s'élève, notamment de façon linéaire, lorsque les vitesses de véhicule sont plus grandes.

6. Procédé selon une des revendications 1 à 5, caractérisé en ce que l'on supprime immédiatement l'action de blocage entre les roues motrices (H_{V}, H_{R}) au freinage du véhicule, en particulier à l'actionnement de la pédale de frein.

7. Dispositif de commande sans gradations du degré de blocage d'engrenages différentiels (1) commandés de l'extérieur dans un essieu moteur de véhicules à plusieurs essieux, selon la revendication 1, dans lequel les capteurs de vitesse de rotation sur l'essieu non moteur (V_{L}, V_{R}) sont connectés à un organe fonctionnel de calculateur (4₂) qui calcule la vitesse de véhicule (v_{F}), caractérisé
en ce que cet organe fonctionnel de calculateur (4₂) calcule en outre une grandeur correspondant à l'angle de braquage (δ), que cet organe fonctionnel de calculateur (4₂) est relié à un autre organe fonctionnel de calculateur (4₃) qui calcule une valeur de consigne de vitesse différentielle (Δ_{vco}) pour les roues de l'essieu moteur (H_{L}, H_{R}) en fonction de la vitesse de véhicule et une grandeur correspondant à l'angle de braquage (δ), ou qui les choisit dans une réserve de valeurs selon-des plages de vitesses, que les capteurs de vitesse de rotation sur les roues de l'essieu moteur (H_{L}, H_{R}) sont reliés à un organe fonctionnel de calculateur (4₁) qui calcule la différence des vitesses de roue (Δᵥᵣₑ) et qu'un organe fonctionnel de calculateur compare la valeur de consigne de vitesse différentielle (Δ_{vco}) et la différence des vitesses de roue (Δᵥᵣₑ) et pilote, par l'intermédiaire d'un organe fonctionnel de calculateur ayant une fonction de régulateur (4₄), un organe de réglage pour l'embrayage de blocage (2) de l'engrenage différentiel.
